# EUROPEAN PATENT APPLICATION

(11) **EP 3 547 091 A1**
(43) Date of publication of application: **02.10.2019**
(21) Application number: 16922311.2
(22) Date of filing: 22.11.2016
(51) Int. Cl.: G06F 3/044, G06F 3/0488

(54) **FLOATING TOUCH CONTROL SENSING METHOD, FLOATING TOUCH CONTROL SENSING SYSTEM AND FLOATING TOUCH CONTROL ELECTRONIC DEVICE**

(71) Applicant: Shenzhen Royole Technologies Co., Ltd., Shenzhen, Guangdong 518052 (CN)
(72) Inventor: LIN, Qi, Shenzhen Guangdong 518052 (CN); YANG, Songling, Shenzhen Guangdong 518052 (CN); YANG, Fan, Shenzhen Guangdong 518052 (CN)
(74) Representative: Hamer, Christopher K.
(86) International application number: PCT/CN2016/106758
(87) International publication number: WO 2018/094558

(57) **Abstract**

A floating touch control sensing method is applicable to a floating touch control electronic device (300). The floating touch control electronic device (300) includes a touch display panel (310). The touch display panel (310) includes a number of icon hotspot areas (312) and a non-icon hotspot area (314). The floating touch control sensing method includes: sensing a floating position of a touch object (101); and responding to a touch control operation performed outside the icon hot-spot areas when the floating position is determined to be higher than a preset position (102). Therefore, false touch control operations are avoided by setting the preset position to improve the accuracy of the touch control operation. A floating touch control sensing system (200) and a floating touch control electronic device (300) are further provided.

## Description

### TECHNICAL FIELD

The present disclosure relates to the field of electronics, and in particular, to a floating touch control sensing method, a floating touch control sensing system, and a floating touch control electronic device.

### BACKGROUND

In recent years, with the rapid development of microelectronics technology, computer hardware, and software technology, terminal devices have foundations to handle complex operations. In addition, users hope that the terminal devices are more powerful, more flexible, and more simpler. With the development of terminal technology, input devices of the terminal devices are gradually changed from original physical buttons to virtual buttons which are also commonly referred to as soft buttons or soft keyboards. However, input technology for the terminal device still needs to be improved. For example, existing input modes are relatively simple and the user experiences is insufficient. Since a size of a screen of the terminal device limits a size of a touch keyboard, the user is likely to make a mistake "click" in inputting operations. Since touch control operations on the touch screen for input is gradually developed to exhaustion, it is expected to develop other non-touching operations for effective input. Floating touch technology applies mutual-capacitance capacitive sensors and self-capacitance capacitive sensors to work at the same time. In brief, the floating touch technology may allow the finger of the user to perform a touch control operation without touching the screen. However, when performing the floating touch control operation, it is not easy for the user to accurately click a desired position (i.e., an icon) on the screen due to a distance between the finger and the screen. For example, when a target point of the floating touch control operation is just in a touch hotspot area of an icon, such as, the finger of the user just floats on an edge of the icon, a false touch may occur and the icon may automatically open instead of an expecting operation.

### SUMMARY

Embodiments of the present disclosure provide a floating touch control sensing method to prevent a false touch control operation and improve the accuracy of touch control operation.

An embodiment of the present disclosure provides a floating touch control sensing method that is applicable to a floating touch control electronic device. The floating touch control electronic device includes a touch display panel. The touch display panel includes a number of icon hotspot areas and a non-icon hotspot area. The floating touch control sensing method includes: sensing a floating position of a touch object; and responding to a touch control operation outside the icon hotspot areas, not responding to a touch control operation performed inside the icon hotspot areas when the floating position is determined to be higher than a preset position.

A corresponding touch control operation is responded when the floating position is determined to be not higher than the preset position.

Responding to the corresponding touch operation includes responding to a touch control operation inside the icon hotspot areas when the floating position corresponds to the icon hotspot areas, and responding to a touch control operation outside the icon hotspot areas when the floating position corresponds to the non-icon hotspot area.

A voltage corresponding to the number of icon hotspot areas is lower than a voltage corresponding to an area outside the icon hotspot areas.

A floating touch control operation with a height less than or equal to a first response distance is responded by the icon hotspot areas. A floating touch control operation with a height less than or equal to a second response distance is responded by the icon hotspot areas. The first response distance corresponding to the icon hotspot areas is shorter than the second response distance corresponding to the non-icon hotspot area.

A voltage of the icon hotspot areas is equal to voltage of the non-icon hotspot area.

A sensing distance of the icon hotspot area and a sensing distance of the non-icon hotspot area are same, and are higher than the first response distance and the second response distance.

The preset position is the first response distance.

Responding to the touch control operation outside the icon hotspot areas includes aggregating icons.

An embodiment of the present disclosure provides a floating touch control sensing system that is applicable to a floating touch control electronic device including a touch display panel. The touch display panel includes a number of icon hotspot areas and a non-icon hotspot areas area. The floating touch control sensing system includes a sensing unit, a determination unit, and a response unit. The sensing unit is operated to sense a floating position of a touch object. The determination unit is operated to determine whether the floating position is higher than a preset position. The response unit is operated to respond to a touch control operation outside the icon hotspot areas and is not operated to respond a touch control operation inside the icon hotspot areas when the floating position is determined to be higher than the preset position.

The response unit is further operated to response to a corresponding touch control operation when the determination unit determines the floating position is not higher than the preset position.

The sensing unit is further operated to sense an area corresponding to the floating position of the touch object. When the sensing unit senses that the floating position corresponds to an inside of the icon hotspot areas, a first position signal is output. When the sensing unit senses that the floating position corresponds to an outside of the icon hotspot areas, a second position signal is output. The response unit is further operated to respond to the touch control operation corresponding to the icon hotspot areas according to the first position signal. The response unit is further operated to respond to the touch control operation corresponding to the area outside the icon hotspot areas according to the second position signal.

A voltage corresponding to the number of icon hotspot areas is lower than a voltage corresponding to the area outside the icon hotspot areas.

A floating touch control operation with a height less than or equal to a first response distance is responded by the icon hotspot areas. A floating touch control operation with a height less than or equal to a second response distance is responded by the non-icon hotspot area. The first response distance corresponding to the icon hotspot areas is shorter than the second response distance corresponding to the non-icon hotspot area.

A voltage of the icon hotspot areas is equal to a voltage of the non-icon hotspot area.

A sensing distance capable of being sensed by the icon hotspot area and a sensing distance capable of being sensed by the non-icon hotspot area are same, and are higher than the first response distance and the second response distance.

The preset position is the first response distance.

The response unit is operated to aggregate icons for responding to the touch control operation outside the icon hotspot areas.

A floating touch control electronic device includes a touch display panel and the above floating touch control sensing system. The touch display panel includes a number of icon hotspot areas and a non-icon hotspot area.

The floating touch control sensing method of present disclosure is applicable to the floating touch control electronic device including the touch display panel. The touch display panel includes the icon hotspot areas and the non-icon hotspot area. The floating touch control sensing method includes: sensing the floating position of the touch object; and responding to the touch control operation outside the icon hotspot areas when the floating position is determined to be higher than the preset position. Therefore, false touch control operations are avoided by setting the preset position to improve the accuracy of the touch control operation.

### BRIEF DESCRIPTION OF THE DRAWINGS

To better illustrate the technical solutions of embodiments of the present disclosure, the following descriptions will briefly illustrate the accompanying drawings described in the embodiments. Obviously, the following described accompanying drawings are merely some embodiments of the present disclosure. Those skilled in the art may obtain other accompanying drawings according to the described accompanying drawings without creative efforts.
FIG. 1 is a flow chart of a floating touch control sensing method according to an embodiment of a first aspect of the present disclosure.
FIG. 2 is a block diagram of a floating touch control sensing system according to an embodiment of a second aspect of the present disclosure.
FIG. 3 is a block diagram of a floating touch control electronic device according to an embodiment of a third aspect of the present disclosure.
FIG. 4 is a schematic view of a touch display panel of FIG. 3.

### DETAILED DESCRIPTION OF ILLUSTRATED EMBODIMENTS

The technical solutions of embodiments of the present disclosure will be described clearly and completely in combination with the accompanying drawings of the embodiments of the present disclosure.

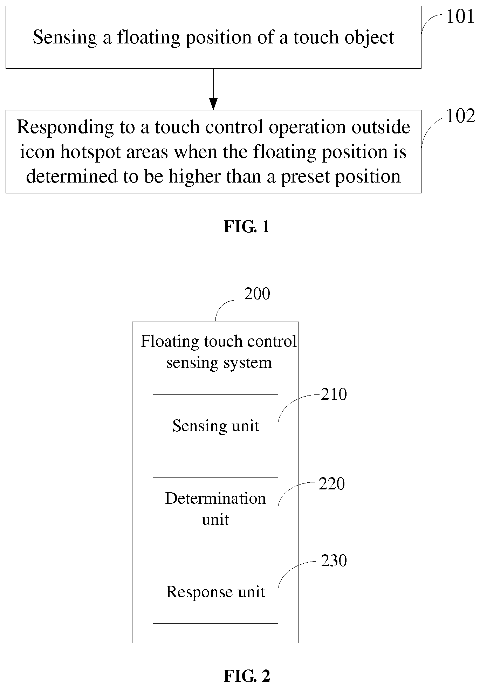

FIG. 1 illustrates a floating touch control sensing method according to an embodiment of a first aspect of the present disclosure. The floating touch control sensing method is applicable to a floating touch control electronic device. The floating touch control electronic device includes a touch display panel. The touch display panel includes a number of icon hotspot areas and a non-icon hotspot area. The floating touch control sensing method includes operations at the following blocks.

At block 101, a floating position of a touch object is sensed.

It should be noted that, a touch control operation may be performed on the touch display panel when using the floating touch control electronic device. That is, without directly touching a screen of the touch display panel 310, the touch object (such as a finger) may directly select items like a mouse when the touch object suspends in the air. The floating position of the touch object is a distance between the touch object and the screen of the touch display panel.

At block 102, when the floating position is determined to be higher than a preset position, the touch control operation outside the icon hotspot areas is responded and the touch control operation inside the icon hotspot areas are not responded.

It should be noted that, it needs to determine whether the floating position is higher than the preset position after the floating position of the touch object is sensed. When the floating position is determined to be higher than the preset position, it indicates that applications corresponding to the non-icon areas are required to be launched, that is, applications located outside the icon hotspot areas 312 are required to respond. At the same time, even though the touch object is located inside the icon hotspot areas, the corresponding applications are not triggered. Therefore, false touch control operations are avoided to improve the accuracy of the touch control operations. The preset position may be adjusted according to practical needs.

The response to the touch control operation located outside the icon hotspot areas includes displaying shortcut gestures. The displaying shortcut gestures include aggregating icons, opening menu bars, and the like.

The floating touch control sensing method further includes the following operations.

When the floating position is determined to be not higher than the preset position, a corresponding touch control operation is responded.

Specifically, when the floating position corresponds to an area inside the icon hotspot areas, the touch control operation inside the icon hotspot areas is responded. When the floating position corresponds to the non-icon hotspot area, the touch control operation outside the icon hotspot areas is responded.

It should be noted that, when the floating position of the touch object is determined to be not higher than the preset position, the touch control operation whether an area corresponding to the floating position of the touch object is located inside the icon hotspot areas or outside the icon hotspot areas may be responded.

Furthermore, a voltage corresponding to the icon hotspot area is lower than a voltage corresponding to an area outside the icon hotspot areas.

Specifically, the voltage corresponding to the icon hotspot area may be set at a low level and the voltage corresponding to the area outside the icon hotspot areas may be set at a high level. When the touch object is located inside the icon hotspot areas and the floating position of the touch object is not higher than the preset position, the corresponding touch control operation may be responded.

It should be noted that, since the voltage corresponding to the icon hotspot areas is at a low level, the touch object may not be sensed and the corresponding touch control operation may not be responded when the floating position of the touch object is higher than the preset position and the touch object is located inside the icon hotspot areas. However, since the voltage corresponding to the area outside the icon hotspot areas is at a high level, the touch object is sensed and the corresponding touch control operation is responded when the floating position of the touch object is higher than the preset position and the touch object is located outside the icon hotspot areas. Therefore, false touch control operations are avoided to improve the accuracy of the touch control operations.

In addition, when the floating position of the touch object is not higher than the preset position, the touch object may be sensed and the corresponding touch control operation may be responded whether the touch object corresponds to the icon hotspot areas or the non-icon hotspot area.

In other embodiments, without setting the voltage corresponding to the icon hotspot area and the voltage corresponding to the area outside the icon hotspot areas, the false touch may be avoided only by setting a determination threshold of the preset position. That is, when the voltage corresponding to the icon hotspot area and the voltage corresponding to the non-icon hotspot area are the same, the floating position (i.e., the distance of the touch object relative to the screen) where the floating touch control operations corresponding to the icon hotspot areas 312 and the non-icon hotspot area 314 to be capable of being sensed are the same, that is, sensing distances are the same. A first response distance with a smaller value is set corresponding to the icon hotspot areas 312 and a second response distance with a smaller value is set corresponding to the non-icon hotspot area 314. The second response distance is greater than the first response distance. When the touch object with a height within a certain sensing range is located above the icon hotspot areas or non-icon hotspot area, the touch object corresponding to the icon hotspot areas or the non-icon hotspot area may be sensed. A capacitance between the touch object and the screen varies with the distance. Therefore, a control unit electrically coupled to the touch screen may calculate a current distance between the touch object and the screen according to the capacitance. The first response distance and the second response distance are shorter than the sensing distances. When the calculated distance is higher than the first response distance corresponding to the icon hotspot areas, the touch control operation of the touch object corresponding to the icon hotspot areas is ignored by the control unit, that is, the touch control operation corresponding to the icon hotspot areas is not responded. When the calculated distance is shorter than the second response distance corresponding to the non-icon hotspot area, the touch control operation corresponding to the non-icon hotspot area is received by the control unit, that is, the touch control operation corresponding to the non-icon hotspot area is responded. When the calculated distance is shorter than the first response distance corresponding to the icon hotspot areas, the touch control operation corresponding to the icon hotspot areas is received by the control unit, that is, the touch control operation corresponding to the icon hotspot areas is responded. Furthermore, the touch screen may also be an infrared touch screen including infrared emitters and infrared receivers disposed at a rear or a side thereof for sensing a height of the touch object relative to the touch screen and a coordinate position of the touch object.

As illustrated in FIG. 2, a floating touch control sensing system 200 according to an embodiment of a second aspect of the present disclosure is provided. The floating touch control sensing system 200 is applied to the floating touch control electronic device. The floating touch control electronic device includes a touch display panel. The touch display panel includes a number of icon hotspot areas and the non-icon hotspot area. The floating touch control sensing system 200 includes a sensing unit 210, a determination unit 220, and a response unit 230.

The sensing unit 210 is operated to sense the floating position of the touch object.

It should be noted that, the touch control operation may be performed on the touch display panel when using the floating touch control electronic device. That is, without directly touching the screen of the touch display panel 310, the touch object (such as the finger) may directly select items like a mouse when the touch object suspends in the air. The floating position of the touch object is the distance between the touch object and the screen of the touch display panel.

The determination unit 220 is operated to determine whether the floating position is higher than the preset position. When the floating position is determined to be higher than the preset position, a first response signal is output. The response unit 230 is operated to respond to the touch control operation outside icon hotspot areas and is not operated to respond to the touch control operation inside the icon hotspot areas according to the first response signal.

It should be noted that, the determination unit 220 is operated to determine whether the floating position is higher than the preset position after the sensing unit 210 senses the floating position of the touch object. When the floating position is determined to be higher than the preset position, it indicates that the application corresponding to the non-icon hotspot area is required to be launched, that is, the application located outside the icon hotspot areas 312 is required to respond. At this time, the response unit 230 starts the application located outside the icon hotspot area according to the first response signal. At the same time, even though the touch object is located inside the icon hotspot areas, the corresponding applications are not triggered. Therefore, false touch control operations are avoided by setting the preset position to improve the accuracy of the touch control operation.

The responses to the touch control operations located outside the icon hotspot areas includes the displaying shortcut gestures. The displaying shortcut gestures include aggregating icons, opening menu bars, and the like.

The determination unit is further operated to output a second response signal when the floating position is determined to be not higher than the preset position. The response unit is further operated to respond to the touch control operation according to the second response signal.

Specifically, the sensing unit 210 is further operated to sense an area corresponding to the floating position of the touch object. When the sensing unit 210 senses that the sensed area of the floating position is located inside the icon hotspot areas, a first position signal is output. When the sensing unit 210 senses that the sensed area of the floating position is located outside the icon hotspot areas, a second position signal is output. The response unit is operated to respond to the touch control operation inside the icon hotspot areas according to the first position signal, and further operated to respond to the touch control operation outside the icon hotspot areas according to the second position signal.

It should be noted that, when the floating position of the touch object is determined to be not higher than the preset position, the touch control operation whether an area corresponding to the floating position of the touch object is located inside the icon hotspot areas or outside the icon hotspot areas may be responded.

Furthermore, the voltage corresponding to the icon hotspot area is lower than the voltage corresponding to the area outside the icon hotspot areas.

The voltage corresponding to the icon hotspot area may be set at a low level, and the voltage corresponding to the area outside the icon hotspot areas may be set at a high level. When the touch object is located inside the icon hotspot areas and the floating position is not higher than the preset position, the corresponding touch control operation may be responded.

It should be noted that, since the voltage corresponding to the icon hotspot area is at a low level, the touch object may not be sensed and the corresponding touch control operation may not be responded when the floating position of the touch object is higher than the preset position and the touch object is located inside the icon hotspot areas. However, since the voltage corresponding to the area outside the icon hotspot areas is at a high level, the touch object is sensed and the corresponding touch control operation is responded when the floating position of the touch object is higher than the preset position and the touch object is located outside the icon hotspot areas. The preset position is set. The voltage corresponding to the icon hotspot area is set at the low level and the voltage corresponding to the area outside the icon hotspot areas is set at the high level. Therefore, false touch control operations are avoided to improve the accuracy of the touch control operations.

In addition, when the floating position of the touch object is not higher than the preset position, the touch object may be sensed and the corresponding touch control operation may be responded whether the touch object corresponds to the icon hotspot areas or the non-icon hotspot area.

In other embodiments, without setting the voltage corresponding to the icon hotspot area and the voltage corresponding to the area outside the icon hotspot areas, the false touch may be avoided only by setting a determination threshold of the preset position. That is, when the voltage corresponding to the icon hotspot area and the voltage corresponding to the non-icon hotspot area are the same, the floating position (i.e., the distance of the touch object relative to the screen) where the floating touch control operations corresponding to the icon hotspot areas 312 and the non-icon hotspot area 314 to be capable of being sensed are the same, that is, sensing distances are the same. A first response distance with a smaller value is set corresponding to the icon hotspot areas 312 and a second response distance with a smaller value is set corresponding to the non-icon hotspot area 314. The second response distance is greater than the first response distance. When the touch object with the height within the certain sensing range is located above the icon hotspot areas or non-icon hotspot area, the touch object corresponding to the icon hotspot areas or the non-icon hotspot area may be sensed. The capacitance between the touch object and the screen varies with the distance. Therefore, the control unit electrically coupled to the touch screen may calculate the current distance between the touch object and the screen according to the capacitance. The first response distance and the second response distance are slightly shorter than the sensed distance. When the calculated distance is higher than the first response distance corresponding to the icon hotspot areas, the touch control operation of the touch object corresponding to the icon hotspot areas is ignored by the control unit, that is, the touch control operation corresponding to the icon hotspot areas is not responded. When the calculated distance is shorter than the second response distance corresponding to the non-icon hotspot area, the touch control operation corresponding to the non-icon hotspot area is received by the control unit, that is, the touch control operation corresponding to the non-icon hotspot area is responded. When the calculated distance is shorter than the first response distance corresponding to the icon hotspot areas, the touch control operation corresponding to the icon hotspot areas is received by the control unit, that is, the touch control operation corresponding to the icon hotspot areas is responded. Furthermore, the touch screen may also be the infrared touch screen including infrared emitters and infrared receivers disposed at the rear or the side thereof for sensing the height of the touch object relative to the touch screen and the coordinate position of the touch object.

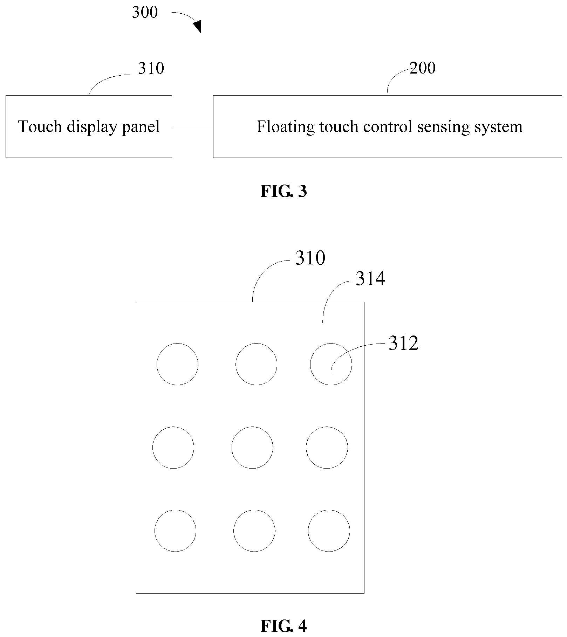

As illustrated in FIG. 3 and FIG. 4, a floating touch control electronic device 300 according to an embodiment of a third aspect of the present disclosure is provided. The floating touch control electronic device 300 includes the touch display panel 310 and the floating touch control sensing system 200. The touch display panel 310 includes the icon hotspot areas 312 and the non-icon hotspot area 314 located outside the icon hotspot areas 312. The floating touch sensing system 200 is the floating touch sensing system 200 provided by the second aspect of an embodiment of present disclosure. The floating touch control sensing system 200 for sensing the floating touch control has been described in detail in the above embodiment of the second aspect of the present disclosure, and details are not described herein again.

In the embodiment, the floating touch control electronic device 300 includes the touch display panel 310 and the floating touch control sensing system 200. The floating touch control sensing system 200 includes the sensing unit 210, the determination unit 220, and the response unit 230. After the sensing unit 210 senses the floating position of the touch object, the determination unit 220 is operated to determine whether the floating position is higher than the preset position. When the floating position is determined to be higher than the preset position, it indicates that the application corresponding to the non-icon area is required to be launched, that is, the applications located outside the icon hotspot areas 312 are required to respond. At this time, the response unit 230 starts the application located outside the icon hotspot area according to the first response signal. At the same time, even though the touch object is located inside the icon hotspot areas, the corresponding applications are not triggered. Therefore, false touch control operations are avoided to improve the accuracy of the touch control operations.

It will be appreciated that the input device body 30 of the present disclosure may also be replaced with a flexible display for use as a rollable display. In addition, the flexible display may also be used with the input device body for more functions.

The embodiments of the present disclosure are described in detail above. It should be noted that those skilled in the art may make some modifications and improvements without departing from the principle of the present disclosure. Those modifications and improvements are also considered to be within the scope of the present disclosure.

## Claims

1. A floating touch control sensing method applicable to a floating touch control electronic device, comprising a touch display panel including a plurality of icon hotspot areas and a non-icon hotspot area, the method comprising:
sensing a floating position of a touch object; and
responding to a touch control operation performed outside the icon hotspot areas, not responding to a touch control operation performed inside the icon hotspot areas when the floating position is determined to be higher than a preset position.

2. The method of claim 1, further comprising:
responding to a corresponding touch control operation when the floating position is determined to be not higher than the preset position.

3. The method of claim 2, wherein responding to the corresponding touch control operation comprises:
responding to a touch control operation inside the icon hotspot areas when the floating position corresponds to the icon hotspot areas; and
responding to a touch control operation outside the icon hotspot areas when the floating position corresponds to the non-icon hotspot area.

4. The method of any one of claim 1 to claim 3, wherein a voltage corresponding to the plurality of icon hotspot areas is lower than a voltage corresponding to an area outside the icon hotspot areas.

5. The method of claim 1, wherein a floating touch control operation with a height less than or equal to a first response distance is responded by the icon hotspot areas and a floating touch control operation with a height less than or equal to a second response distance is responded by the non-icon hotspot area, wherein the first response distance corresponding to the icon hotspot areas is shorter than the second response distance corresponding to the non-icon hotspot area.

6. The method of claim 5, wherein a voltage corresponding to the icon hotspot areas is equal to a voltage corresponding to the non-icon hotspot area.

7. The method of claim 5, wherein a sensing distance corresponding to the icon hotspot areas and a sensing distance corresponding to the non-icon hotspot area are same, and are higher than the first response distance and the second response distance.

8. The method of claim 5, wherein the preset position is the first response distance.

9. The method of any one of claim 1 to claim 3, wherein responding to the touch control operation performed outside the icon hotspot areas comprises aggregating icons.

10. A floating touch control sensing system applicable to a floating touch control electronic device, comprising a touch display panel including a plurality of icon hotspot areas and a non-icon hotspot areas area, the floating touch control sensing system comprising:a sensing unit, operated to sense a floating position of a touch object;
a determination unit, operated to determine whether the floating position is higher than a preset position; and
a response unit, operated to respond to a touch control operation outside the icon hotspot areas, not respond to a touch control operation inside the icon hotspot areas when the floating position is determined to be higher than the preset position.

11. The system of claim 10, wherein the response unit is further operated to response to a corresponding touch control operation when the floating position is determined to be not higher than the preset position.

12. The system of claim 11, wherein the sensing unit is further operated to sense an area corresponding to the floating position of the touch object, wherein a first position signal is output when the sensing unit senses that the floating position corresponds to an inside of the icon hotspot areas; a second position signal is output when the sensing unit senses that the floating position corresponds to an outside of the icon hotspot areas; wherein the response unit is further operated to respond to the touch operation corresponding to the icon hotspot areas according to the first position signal and to respond to the touch operation corresponding to the area outside the icon hotspot areas according to the second position signal.

13. The system of claim of any one of claim 10 to claim 12, wherein a voltage corresponding to the plurality of icon hotspot areas is lower than a voltage corresponding to the area outside the icon hotspot areas.

14. The system of claim 10, wherein a floating touch control operation with a height less than or equal to a first response distance is responded by the icon hotspot areas; and a floating touch control operation with a height less than or equal to a second response distance is responded by the non-icon hotspot area, wherein the first response distance corresponding to the icon hotspot areas is shorter than the second response distance corresponding to the non-icon hotspot area.

15. The system of claim 14, wherein a voltage corresponding to the icon hotspot areas is equal to a voltage corresponding to the non-icon hotspot area.

16. The system of claim 14, wherein a sensing distance corresponding to the icon hotspot areas and a sensing distance corresponding to the non-icon hotspot area are same, and are higher than the first response distance and the second response distance.

17. The system of claim 14, wherein the preset position is the first response distance.

18. The system of claim of any one of claim 10 to claim 12, wherein the response unit is operated to aggregate icons for responding to the touch control operation outside the icon hotspot areas.

19. A floating touch control electronic device comprising a touch display panel and the floating touch control sensing system of any one of claims 10-18, wherein the touch display panel comprises a plurality of icon hotspot areas and a non-icon hotspot area.
